# EUROPÄISCHE PATENTSCHRIFT

(11) **EP 1 419 584 B1**
(45) Veröffentlichungstag und Bekanntmachung des Hinweises auf die Patenterteilung: **01.10.2008**
(21) Anmeldenummer: 02758164.4
(22) Anmeldetag: 23.08.2002
(51) Int. Cl.: H04B 1/38, B60R 11/02

(54) **HALTERUNG FÜR EIN ELEKTRONISCHES GERÄT**
HOLDER FOR AN ELECTRONIC DEVICE
SYSTEME DE SUPPORT POUR DISPOSITIF ELECTRONIQUE

(30) Priorität: 23.08.2001 DE 10140379
(43) Veröffentlichungstag der Anmeldung: 19.05.2004
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Eisele, Otten, Roth & Dobler
(86) Internationale Anmeldenummer: PCT/DE2002/003135
(87) Internationale Veröffentlichungsnummer: WO 2003/019803

(56) Entgegenhaltungen:
- EP-A- 1 033 287
- WO-A-95/28789
- DE-A- 19 538 249
- DE-A- 19 835 017
- DE-U- 20 014 806
- US-A- 5 493 703
- US-B1- 6 208 734

## Beschreibung

Die Erfindung betrifft eine Halterung für ein elektronisches Gerät nach dem oberbegriff des Anspruchs 1.

Aus der WO 95/28789 A1 ist eine Halterung für ein Mobiltelefon bekannt, welche eine Basiseinheit und einen mit diesem lösbar verbundenen Adapter aufweist, wobei der Adapter für die elektrische bzw. elektronische und mechanische Anpassung an das Mobiltelefon ausgebildet ist. Nachteilig an einer derartigen Halterung ist die bei beengten Platzverhältnissen schwierige Entnahme des Mobiltelefons bzw. des Mobiltelefons und des Adapters.

Der Erfindung liegt die Aufgabe zugrunde, eine Halterung für ein elektronisches Gerät zu entwickeln, welche für eine vielzahl unterschiedlicher Mobiltelefone geeignet ist und eine Entnahme des Mobiltelefons aus der Halterung erleichtert.

Diese Aufgabe wird ausgehend von den Merkmalen des Oberbegriffs des Anspruchs 1 erfindungsgemäß durch die kennzeichnenden Merkmale des Anspruchs 1 gelöst. Durch die in den Unteransprüchen genannten Merkmale sind vorteilhafte Ausführungen und Weiterbildungen der Erfindung möglich.

Die erfindungsgemäße Halterung weist einen Adapter auf, welcher zwischen dem Träger und dem Mobiltelefon einsetzbar ist und für eine elektrische bzw. elektronische und/oder mechanische Anpassung von Träger und Mobiltelefon aufeinander vorgesehen ist. Hierdurch ist es möglich, ohne bauliche veränderung den Träger und das Grundelement für die verschiedensten elektronischen Geräte bzw. Mobiltelefone einzusetzen, da mittels des Adapters eine Anpassung des Trägers auf die Form des elektronischen Gerätes und auf die Schnittstelle des elektronischen Gerätes möglich ist. Die Anpassung erfolgt durch ein einfaches Aufstecken des Zwischenstücks auf den Träger und ist somit auch für den Laien ohne Probleme ausführbar.

Eine vorteilhafte Ausbildung des Erfindungsgegenstandes sieht vor, den Träger gemeinsam mit dem Adapter gegenüber dem Grundelement um eine im wesentlichen waagrecht liegende bzw. quer zur Längsachse und parallel zur Oberseite des Mobiltelefons verlaufende Drehachse zu verschwenken.
Hierdurch wird der Adapter bzw. das im Adapter gehaltene Mobiltelefon bei einer Anordnung in der Mittelkonsole oder im Cockpit eines Kraftfahrzeugs in Blickrichtung des Bedieners geschwenkt und ist somit in allen Schwenkpositionen gut sichtbar.

Weiterhin ist es vorteilhaft, den Träger und den Adapter über Haltemittel zueinander zu fixieren. Hierdurch ist gewährleistet, dass der Adapter und der Träger, welche eine Funktionseinheit bilden, im Alltagsbetrieb zuverlässig aneinander gehalten sind und nur durch eine bewusste Handlung des Benutzers voneinander gelöst werden. Insbesondere ist es vorgesehen, den Adapter und den Träger über wenigstens eine Schraubverbindung vorübergehend miteinander zu verbinden.

Es ist von besonderem Vorteil, wenn der Adapter im Wesentlichen die Rückseite des Mobiltelefons umgreift. Hierdurch ist das Mobiltelefon durch den Adapter optimal unterstützt und erlaubt gleichzeitig die Bedienung aller auf der Vorderseite des Mobiltelefons vorhandenen Drucktasten und einen ungehinderten Blick auf das Display des Mobiltelefons.

Erfindungsgemäß wird weiter vorgeschlagen, den Adapter und den Träger mit elektrischen und/oder optischen Kontakten auszustatten, um eine Kommunikation zwischen Adapter und/oder Träger und/oder Funktelefon zu ermöglichen.

Die Erfindung sieht auch vor, den Träger mit dem Adapter und/oder dem Mobiltelefon zum Datenaustausch mittels einer Funkverbindung zu verbinden. Hierdurch ist es möglich, auf mechanische Kontakte zu verzichten. Alternativ ist es vorgesehen, die Funkverbindung zur Übermittlung von Daten und Sprachsignalen zwischen dem Mobiltelefon und dem Kraftfahrzeug vorzusehen und Antennensignale über einen mechanischen Kontakt zu leiten.

Weiterhin sieht die Erfindung vor, den Adapter einteilig oder mehrteilig auszubilden. Ein einteiliger Adapter stellt ein besonders einfaches, leicht zu handhabendes Bauteil dar. Mit einem mehrteiligen Adapter ist es möglich, gegebenenfalls durch Auswechseln eines einzelnen Teils des Adapters eine Anpassung auf ein anderes Mobiltelefon vorzunehmen und somit einen Teil des Adapters weiterzuverwenden.

Die Erfindung sieht weiterhin vor, zwischen dem Träger- und dem Grundelement ein Federelement oder einen Antrieb, insbesondere einen elektromotorischen Antrieb anzuordnen und hierdurch eine Bewegung aus einer Liegeposition, in welcher der Träger auf dem Grundelement aufliegt, in eine Kippposition, in welcher der Träger in einem Winkel von etwa 5° bis 45° zum Grundelement steht, anzufahren. In der Liegeposition und/oder in der Kippposition ist der Träger vorzugsweise durch mechanische und/oder elektromechanische Rastelemente gehalten.

Gemäß einer besonderen Ausführungsform ist es vorgesehen, den Adapter gemeinsam mit dem Mobiltelefon als Telefoneinheit zu verwenden, welche vom Träger trennbar ist. Eine derartige Trennbarkeit erlaubt das Führen von vertraulichen Gesprächen, da die Telefoneinheit wie ein Handapparat nutzbar ist. Zur Verwirklichung dieser Komfortfunktion ist es weiterhin vorgesehen, den Adapter mit einem Lautsprecher und einem Mikrofon auszugestalten, welche insbesondere auf einer von dem Mobiltelefon abgewandten Unterseite des Adapters angeordnet sind. Durch diese Ausführung ist es möglich, den Lautersprecher und das Mikrofon optimal auf die Gegebenheiten in einem Kraftfahrzeug anzupassen.

Schließlich sieht die Erfindung vor, das mechanische Rastelement, welches den Träger in der Liegeposition am Grundelement hält als sogenannte Push-Push-Mechanik auszubilden. Durch diese ist es möglich, manuell zwischen der Liegeposition und der Kippposition des Trägers zu wählen, ohne dass an der Halterung irgendwelche nach außen sichtbaren Hebel oder Knöpfe erforderlich sind. Die Bedienung der Push-Push-Mechanik erfolgt intuitiv. Ausgehende von einem in der Liegeposition gehaltenen Träger bewirkt ein sanftes Niederdrücken des Trägers in Richtung des Grundelements eine Freigabe des Trägers aus der Liegeposition, so dass dieser durch den Antrieb in die Kippposition gehoben wird. Die Rückführung des Trägers aus der Kippposition in die Liegeposition erfolgt durch das Niederdrücken bzw. Schwenken des Trägers auf das Grundelement. Sobald die Liegeposition erreicht ist, hält die Push-Push-Mechanik den Träger wieder am Grundelement fest. Dieser Vorgang lässt sich beliebig oft wiederholen. Die Push-Push-Mechanik wechselt hierbei ständig zwischen den Schaltzuständen Halten und Freigeben.

Weitere Einzelheiten der Erfindung werden in der Zeichnung anhand von schematisch dargestellten Ausführungsbeispielen beschrieben.

Hierbei zeigt:
- Figur 1: einen Träger mit einem Adapter und einem Funktelefon in einer Liegeposition,
- Figur 2: den in Figur 1 dargestellten Träger mit Adapter und Mobiltelefon in einer Kippstellung,
- Figur 3: einen Adapter mit einem Mobiltelefon und
- Figur 4: eine Draufsicht auf die in Figur 1 dargestellte Anordnung.

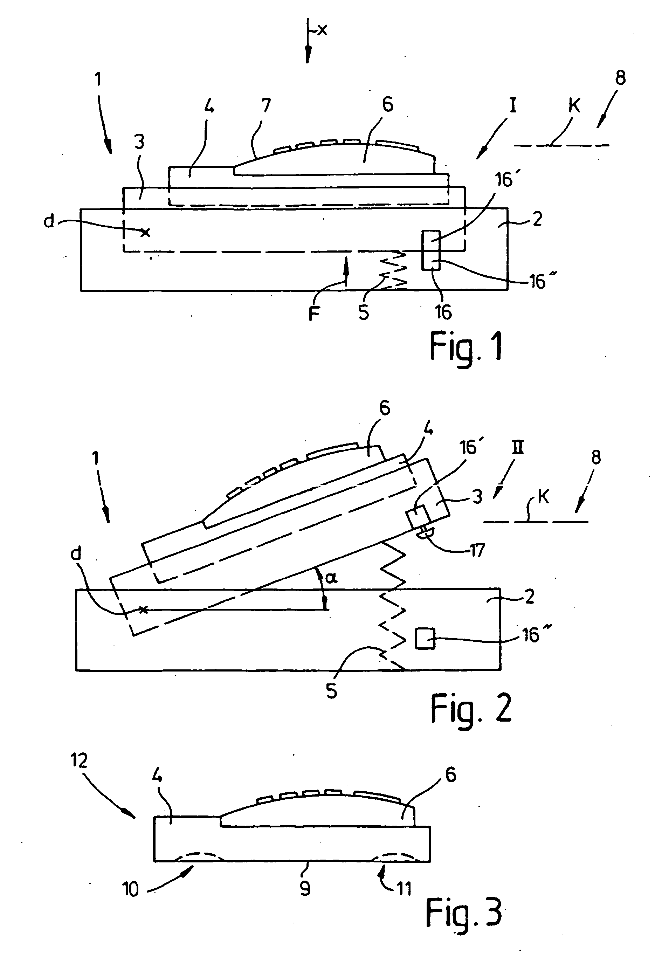

In Figur 1 ist eine Halterung 1 dargestellt, welche sich aus einem Grundelement 2, einem Träger 3 und einem Adapter 4 zusammensetzt. Das Grundelement 2 und der Träger 3 sind über eine senkrecht in die Zeichenebene verlaufende Drehachse d drehbar miteinander verbunden, wobei der Träger 3 über eine lösbare Rastverbindung 16 gegen eine in Pfeilrichtung F wirkende Kraft einer Feder 5 gesichert ist. Der Adapter 4 ist über nicht dargestellte Rastverbindungen oder eine nicht dargestellte Schraubverbindung am Träger 3 fixiert. Der Träger 3 und der Adapter 4 befinden sich in einer Liegposition I. Im Adapter 4 ist ein elektronisches Gerät bzw. Mobiltelefon 6 über nicht dargestellte, lösbare Rastverbindungen gehalten. Eine Oberseite 7 des Mobiltelefons 6 ist aus einer Pfeilrichtung x frei zugänglich. Eine nicht dargestellte Rückseite des Mobiltelefons, welche der Oberseite 7 gegenüber liegt, ist vollständig vom Adapter 4 aufgenommen. Die Rastverbindung 16 ist zweiteilig aufgebaut, wobei eine erste Komponente 16' der Rastverbindung 16 am Träger 3 befestigt ist und eine zweite Komponente 16'' der Rastverbindung 16 mit dem Grundelement 2 in Verbindung steht. Durch den Zusammenhalt der Komponenten 16', 16'' wird der Träger 3 gegen die Kraft der Feder 5 am Grundelement 2 gehalten.

In Figur 2 ist die in Figur 1 dargestellte Halterung 1 in einer Kippposition II gezeigt. In dieser Kippposition II ist der Träger 3 und der mit ihm verbundene Adapter 4 um einen Winkel α aus der in Figur 1 dargestellten Liegeposition I verschwenkt. Die für den Verschwenkvorgang notwendige Energie wird von der Feder 5 aufgebracht. Die Kippposition II dient insbesondere zur Erleichterung der Entnahme des Mobiltelefons 6 aus der Halterung 1, wenn diese in einer Konsole 8 angeordnet ist, welche eine Oberkante K (durch eine gestrichelte Linie angedeutet) aufweist. In der Kippposition II ist die als Push-Push-Mechanik ausgeführte Rastverbindung 16 geöffnet. Die Komponente 16'' hat die Komponente 16' freigegeben. Bei einem Niederdrücken des Trägers 3 auf das Grundelement 2 taucht ein zu der Komponente 16' gehörender Pilzzapfen 17 in die Komponente 16'' ein und wird dort von einer nicht näher dargestellten Mechanik gegriffen und gehalten.

In Figur 3 ist ein Adapter 4 dargestellt, der unabhängig vom Träger ein Mobiltelefon 6 hält. Der Adapter weist an einer Unterseite 9 ein Mikrofon 10 und einen Lautsprecher 11 auf, und bildet gemeinsam mit Mobiltelefon 6 eine Telefoneinheit bzw. einen Handapparat 12. Gemäß einer nicht dargestellten Ausführungsvariante ist der Handapparat 12 über ein Kabel mit einem Träger bzw. Grundelement verbunden.

Für alle Ausführungsvarianten gilt, dass die Verbindung des Mobiltelefons zu in der Halterung oder im Fahrzeug angeordneten Zusatzkomponenten, wie Freisprecheinrichtung, Anzeigeeinrichtung, Antennenverstärker oder Antenne drahtlos und/oder über Kontakte und Kabel erfolgt.

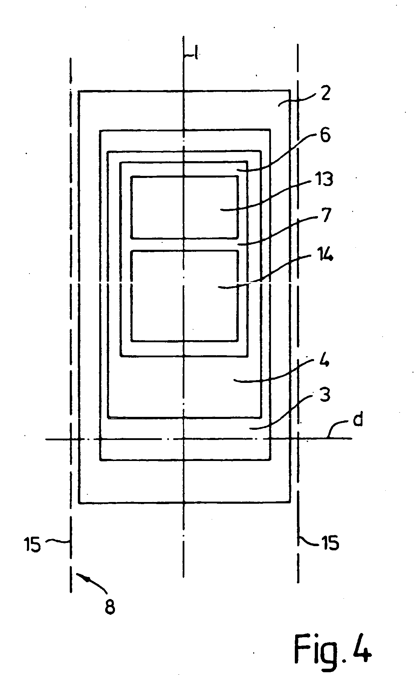

In Figur 4 ist eine Draufsicht auf die in Figur 1 dargestellte Mobiltelefonhalterung zu sehen. Das Mobiltelefon 6 weist ein Display 13 und einen vereinfacht dargestellten Tastaturblock 14 auf und ist vollständig vom Adapter 4 umgeben. Der Adapter 4 liegt im Träger 3 und ist mit diesem um die Drehachse d drehbar am Grundelement 2 angelenkt. Die Drehachse d verläuft senkrecht zu einer Längsachse 1 des Mobiltelefons 6 und etwa parallel zur Oberseite 7 des Mobiltelefons. Mit gestrichelten Linien sind Seitenwände 15 der Konsole 8 angedeutet.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, die erfindungsgemäße Halterung im Dachbereich eines Fahrzeugs anzuordnen.

### Bezugszeichenliste:

- 1: Halterung
- 2: Grundelement
- 3: Träger
- 4: Adapter
- 5: Feder
- 6: Mobiltelefon
- 7: Oberseite von 6
- 8: Konsole
- 9: Unterseite von 4
- 10: Mikrofon
- 11: Lautsprecher
- 12: Telefoneinheit, Handapparat
- 13: Display
- 14: Tastaturblock
- 15: Seitenkante von 8
- 16: Rastverbindung
- 16': erste Komponente von 16
- 16": zweite Komponente von 16
- 17: Pilzzapfen
- d: Drehachse von 1
- 1: Längsachse von 6
- I: Liegestellung
- II: Kippstellung
- α: Winkel zwischen 2 und 3

## Patentansprüche

1. Halterung (1) für ein elektronisches Gerät (6), insbesondere ein Mobiltelefon (6), mit einem schwenkbar an einem Grundelement (2) angelenkten Träger (3) und einem mit diesem lösbar verbundenen Adapter (4), welcher zwischen dem Träger (3) und dem elektronischen Gerät (6) angeordnet ist und für die elektrische bzw. elektronische und die mechanische Anpassung an das elektronische Gerät (6) ausgebildet ist, **dadurch gekennzeichnet,**
**dass** der Träger (3) gemeinsam mit dem Adapter (4) gegenüber dem Grundelement (2) der Halterung (1) aus einer Liegeposition (I) in eine Kippposition (II) verschwenkbar ist, wobei die Drehachse (d), um welche der Träger (3) mit dem Adapter (4) zum Grundelements (2) verschwenkbar ist, senkrecht zu der Längsachse (1) des elektronischen Geräts (6) und im wesentlichen parallel zu seiner Ober- bzw. Vorderseite (7) verläuft.

2. Halterung nach einem der vorhergehenden Ansprüche, **dadurch gekennzeichnet, dass** das Grundelement (2) in einer Konsole (8) oder in einem Cockpit-eines Fahrzeugs angeordnet ist.

3. Halterung nach einem der vorhergehenden Ansprüche, **dadurch gekennzeichnet, dass** der Träger (3) mit dem Adapter (4) über Haltemittel zusammengehalten ist, wobei insbesondere gefederte Schieber, Rastverbindungen, Klettverbindungen, Klemmverbindung, Permanentmagnete, Elektromagnete oder Schraubverbindungen vorgesehen sind.

4. Halterung nach einem der vorhergehenden Ansprüche, **dadurch gekennzeichnet, dass** das Mobiltelefon (6) aus dem Adapter (4) entnehmbar und in diesen einsetzbar ist, wobei der Adapter (4) vorzugsweise in dem Träger (3) gehalten bleibt.

5. Halterung nach einem der vorhergehenden Ansprüche, **dadurch gekennzeichnet, dass** der Adapter (4) gemeinsam mit dem Mobiltelefon (6) aus dem Träger (3) entnehmbar und in den Träger einsetzbar ist.

6. Halterung nach einem der vorhergehenden Ansprüche, **dadurch gekennzeichnet, dass** der Adapter (4) im Wesentlichen die Rückseite des Mobiltelefons (6) umgreift.

7. Halterung nach einem der vorhergehenden Ansprüche, **dadurch gekennzeichnet, dass** der Adapter (4) Kontakte zur elektrischen und/oder optischen Kontaktierung des Funktelefons (6) aufweist.

8. Halterung nach einem der vorhergehenden Ansprüche, **dadurch gekennzeichnet, dass** der Adapter (4) Kontakte zur elektrischen und/oder optischen Kontaktierung des Trägers (3) aufweist.

9. Halterung nach einem der vorhergehenden Ansprüche, **dadurch gekennzeichnet, dass** der Träger (3) mit dem Adapter (4) und/oder dem Mobiltelefon (6) über eine Funkverbindung verbunden ist.

10. Halterung nach einem der vorhergehenden Ansprüche, **dadurch gekennzeichnet, dass** der Adapter (4) mit dem Mobiltelefon (6) über eine Funkverbindung verbunden ist.

11. Halterung nach einem der vorhergehenden Ansprüche, **dadurch gekennzeichnet, dass** der Adapter (4) einteilig oder mehrteilig ausgebildet ist.

12. Halterung nach einem der vorhergehenden Ansprüche, **dadurch gekennzeichnet, dass** zwischen dem Träger (3) und dem Grundelement (2) ein Federelement (5) angeordnet ist, das den Träger (3) aus einer Liegeposition (I) in eine Kippposition (II) drückt.

13. Halterung nach einem der vorhergehenden Ansprüche, **dadurch gekennzeichnet, dass** der Träger (3) durch ein mechanisches und/oder elektromechanisches Rastelement, wie einen Rasthaken oder einen Elektromagnet, in der Liegeposition (I) gehalten ist.

14. Halterung nach einem der vorhergehenden Ansprüche, **dadurch gekennzeichnet, dass** der Träger (3) zwischen der Liegeposition (I) und der Kippposition (II) durch einen Antrieb, insbesondere einen elektromotorischen Antrieb verfahrbar ist.

15. Halterung nach einem der vorhergehenden Ansprüche, **dadurch gekennzeichnet, dass** der Adapter (4) einen Lautsprecher (11) und ein Mikrofon (10) aufweist, die insbesondere auf der Unterseite (9) des Adapters (4) angeordnet sind.

16. Halterung nach Anspruch 13, **dadurch** gekenntzeichnet, dass das mechanische Rastelement als sogenannte Push-Push-Mechanik ausgebildet ist, welche den Träger (3), wenn dieser in der Liegeposition (I) gehalten ist, nach einem leichten Drücken des Trägers (3) in Richtung des Grundelements (2) aus der Liegeposition (I) in die Kippposition (II) freigibt und den Träger (3), wenn dieser in der Kippposition (II) steht, nach einem Niederdrücken aus der Kippposition (II) in die Liegeposition (I) wieder am Grundelement (2) in der Liegeposition (I) hält.

## Claims

1. Mount (1) for an electronic device (6), in particular a mobile phone (6), with a support (3) hinged pivotably onto a base element (2) and an adapter (4) connected detachably thereto, which is arranged between the support (3) and the electronic device (6) and is designed for the electric or electronic and mechanical adjustment to the electronic device (6), **characterised in that** the support (3) together with the adapter (4) can be pivoted relative to the base element (2) of the mount (1) from a lying position (I) into a tilted position (II), wherein the rotational axis (d) about which the support (3) can be pivoted with the adapter (4) relative to the base element (2) runs perpendicular to the longitudinal axis (1) of the electronic device (6) and essentially parallel to its upper or front side (7).

2. Mount according to one of the preceding claims, **characterised in that** the base element (2) is arranged in a console (8) or in a cockpit of a vehicle.

3. Mount according to one of the preceding claims, **characterised in that** the support (3) is held together with the adapter (4) by holding means, wherein in particular resilient slides, interlocking connections, Velcro connections, clamping connections, permanent magnets, electromagnets or screw connections are provided.

4. Mount according to one of the preceding claims, **characterised in that** the mobile phone (6) can be taken out of the adapter (4) and inserted into the latter, whereby the adapter (4) is preferably held in the support (3).

5. Mount according to one of the preceding claims, **characterised in that** the adapter (4) can be removed from and inserted into the support (3) together with the mobile phone (6).

6. Mount according to one of the preceding claims, **characterised in that** the adapter (4) essentially grips around the rear side of the mobile phone (6).

7. Mount according to one of the preceding claims, **characterised in that** the adapter (4) has contacts for electrically and/or optically contacting the radio phone (6).

8. Mount according to one of the preceding claims, **characterised in that** the adapter (4) has contacts for electrically and/or optically contacting the support (3).

9. Mount according to one of the preceding claims, **characterised in that** the support (3) is connected to the adapter (4) and/or the mobile phone (6) via a radio connection.

10. Mount according to one of the preceding claims, **characterised in that** the adapter (4) is connected to the mobile phone (6) via a radio connection.

11. Mount according to one of the preceding claims, **characterised in that** the adapter (4) is designed in one piece or several pieces.

12. Mount according to one of the preceding claims, **characterised in that** between the support (3) and the base element (2) a spring element (5) is arranged which pushes the support (3) from a lying position (I) into a tilted position (II).

13. Mount according to one of the preceding claims, **characterised in that** the support (3) is held in the lying position (I) by a mechanical and/or electromechanical interlocking element, such as a hook or electromagnet.

14. Mount according to one of the preceding claims, **characterised in that** the support (3) can be moved between the lying position (I) and the tilted position (II) by a drive, in particular an electric motor drive.

15. Mount according to one of the preceding claims, **characterised in that** the adapter (4) comprises a loudspeaker (11) and a microphone (10), which are arranged in particular on the lower side (9) of the adapter (4).

16. Mount according to claim 13, **characterised in that** the mechanical interlocking element is a so-called push-push mechanism, which when the support (3) is held in the lying position (I), after lightly pushing the support (3) in the direction of the base element (2), releases the support (3) from the lying position (I) into the tilted position (II), and when the support (3) is in the tilted position (II), after pushing down from the tilted position (II) into the lying position (I), holds the support (3) again on the base element (2) in the lying position (I).

## Revendications

1. Dispositif de support (1) pour un appareil électronique (6) notamment un téléphone mobile (6) comportant un support (3) articulé de manière pivotante sur un élément de base (2) ainsi qu'un adaptateur (4) relié de manière amovible à celui-ci, cet adaptateur installé entre le support (3) et l'appareil électronique (6) étant conçu pour assurer l'adaptation électrique ou électronique et l'adaptation mécanique à l'appareil électronique (6),
**caractérisé en ce que**
le support (3) est monté pivotant en commun avec l'adaptateur (4) par rapport à l'élément de base (2) du dispositif de support (1), entre une position couchée (I) et une position basculée (II),
l'axe de rotation (d) autour duquel bascule le support (3) avec l'adaptateur (4) par rapport à l'élément de base (2) étant perpendiculaire à l'axe longitudinal (1) de l'appareil électronique (6) et il est pratiquement parallèle à sa face supérieure respectivement face avant (7).

2. Dispositif de support selon la revendication 1,
**caractérisé en ce que**
l'élément de base (2) est installé sur une console (8) ou dans un habitacle de véhicule.

3. Dispositif de support selon l'une des revendications précédentes,
**caractérisé en ce que**
le support (3) est réuni à l'adaptateur (4) par des moyens de fixation et notamment un coulisseau à ressort, des liaisons à enclipsage, des liaisons à griffes, une liaison par serrage, des aimants permanents, des électroaimants ou des liaisons vissées.

4. Dispositif de support selon l'une des revendications précédentes,
**caractérisé en ce que**
le téléphone mobile (6) peut s'e traire de l'adaptateur (4) et être placé dans celui-ci, l'adaptateur (4) restant de préférence retenu dans le support (3).

5. Dispositif de support selon l'une des revendications précédentes,
**caractérisé en ce que**
l'adaptateur (4) s'e trait en commun avec le téléphone mobile (6) du support (3) ou se place dans celui-ci en commun.

6. Dispositif de support selon l'une des revendications précédentes,
**caractérisé en ce que**
l'adaptateur (4) entoure pratiquement le dos du téléphone mobile (6).

7. Dispositif de support selon l'une des revendications précédentes,
**caractérisé en ce que**
l'adaptateur (4) présente des contacts pour réaliser le branchement électrique et/ou optique du téléphone mobile (6).

8. Dispositif de support selon l'une des revendications précédentes,
**caractérisé en ce que**
l'adaptateur (4) présente des contacts pour réaliser le contact électrique et/ou optique du support (3).

9. Dispositif de support selon l'une des revendications précédentes,
**caractérisé en ce que**
le support (3) est relié à l'adaptateur (4) et/ou au téléphone mobile (6) par une liaison radio.

10. Dispositif de support selon l'une des revendications précédentes,
**caractérisé en ce que**
l'adaptateur (4) est relié au téléphone mobile (6) par une liaison radio.

11. Dispositif de support selon l'une des revendications précédentes,
**caractérisé en ce que**
l'adaptateur (4) est réalisé en une partie ou en plusieurs parties.

12. Dispositif de support selon l'une quelconque des revendications précédentes,
**caractérisé en ce qu'**
un élément de ressort (5) est prévu entre le support (3) et l'élément de base (2), cet élément de ressort poussant le support (3) de sa position couchée (I) vers sa position basculée (II).

13. Dispositif de support selon l'une quelconque des revendications précédentes,
**caractérisé en ce que**
le support (3) est tenu en position couchée (I) par un élément d'accrochage mécanique et/ou électromécanique tel qu'un crochet d'enclipsage ou un électro-aimant.

14. Dispositif de support selon l'une quelconque des revendications précédentes,
**caractérisé en ce que**
le support (3) est mobile entre la position couchée (I) et la position basculée (II) par un moyen d'entraînement, notamment un entraînement à moteur électrique.

15. Dispositif de support selon l'une quelconque des revendications précédentes,
**caractérisé en ce que**
l'adaptateur (4) comporte un haut-parleur (11) et un microphone (10) qui sont prévus en particulier sur la face inférieure (9) de l'adaptateur (4).

16. Dispositif de support selon la revendication 13,
**caractérisé en ce que**
l'élément d'accrochage mécanique est réalisé sous la forme d'un mécanisme à poussée/traction, qui libère le support (3) lorsque celui-ci est tenu en position couchée (I), en e ercant une légère pression sur le support (3) en direction de l'élément de base (2), pour le libérer de sa position couchée (I) vers sa position basculée (II) et on retient de nouveau le support (3) à l'élément de base (2) dans sa position couchée (I) lorsque celui-ci est en position basculée (II), en l'enfoncant à partir de sa position basculée (II) dans sa position couchée (I).
